# EUROPEAN PATENT APPLICATION

(11) **EP 1 637 987 A2**
(43) Date of publication of application: **22.03.2006**
(21) Application number: 05002519.6
(22) Date of filing: 07.02.2005
(51) Int. Cl.: G06F 3/06

(54) **Operation environment associating data migration method**

(30) Priority: 16.09.2004 JP 2004269247
(71) Applicant: Hitachi Ltd., Tokyo 100-8280 (JP)
(72) Inventor: Shirogane, Tetsuya c/o Hitachi, Ltd., I. P. Group, Chiyoda-ku Tokyo 100-8220 (JP); Nonaka, Yusuke c/o Hitachi, Ltd., I. P. Group, Chiyoda-ku Tokyo 100-8220 (JP)
(74) Representative: Beetz & Partner

(57) **Abstract**

The invention relates to a technology that improves the reproducibility of stored data in response to a change in the operation environment of the host computer (10) is provided. Operation environment identification information that identifies the operation environment of the host computer (10) is obtained, the software operation environment identified by the operation environment identification information is obtained as a stored software environment from the host computer (10), and when the stored data stored in a storage system (30) is migrated to a storage system (40), the operation environment identification information and stored software environment are stored in the storage system (40) in association with the stored software.

## Description

### BACKGROUND

The present invention relates to a data storage management technology that manages the long-term storage of data, and relates more particularly to a data storage management technology used in a data lifecycle management system that uses multiple storage systems to save at least some host data handled by a host computer.

In the conventional art, a data storage management technology is known that migrates data stored in a data lifecycle management system to an appropriate storage system suited for changes over time in the value of such data, such as changes in the data's importance or in its frequency of use. Such technology may be also referred as data lifecycle management technology. For example, U.S. Patent No. 6,108,748 Specification discloses a technology in which stored data is migrated between storage systems. In this Specification, 'data storage in a data lifecycle management system' refers to the storage (noun) of data in at least one of multiple storage systems in a data lifecycle management system. In addition, in this Specification, 'migration of data from a prescribed storage system to a different storage system' refers to the copying of data stored in a prescribed storage system to a different storage system and the deletion of such data from the prescribed storage system.

### SUMMARY

However, in the conventional data storage management technology, although stored data is migrated to a suitable storage system in accordance with changes thereto over time, it is not guaranteed that the application program that can process the stored data can work on the host computer in case the operation environment of the host computer has changed. So, there is a risk that the host computer will be unable to process the stored data in the conventional data lifecycle management system.

Therefore, there is need to provide a data storage management technology that resolves the above problem and increases the reproducibility of stored data where the host computer operation environment has changed.

In order to resolve the problem described above, the present invention is directed to a method of data storage management in multiple storage systems that save at least some of the host data handled by a host computer as stored data in order to manage a migration of said stored data between said multiple storage systems, said method may comprise: providing a storage management server that accesses said multiple storage systems; obtaining hardware identification information which reproducibly identifies a hardware operation environment used by said host computer to process said stored data; obtaining a software operation environment used by said host computer to process said stored data from said host computer; migrating said stored data stored in a prescribed storage system among said multiple storage systems to a different storage system different from said prescribed storage system; storing said hardware identification information and said software operation environment in said different storage system; and/or making associations of said hardware identification information and said software operation environment stored in said different storage system, with said stored data stored in said different storage, by said storage management server.

According to the data storage management method, even where the operation environment of the host computer has been changed, such environment can be recreated based on the hardware identification information and software operation environment associated with the stored data, the reproducibility of the stored data can be improved. Furthermore, because improvement of the reproducibility of stored data is not based on conversion of the stored data into a data format or the like that is compatible with the post-change host computer operation environment, the reproducibility of the stored data can be improved while maintaining the stored data in its original state. Moreover, because the reproducibility of stored data is ensured by associating it with hardware identification information and a software operation environment, the storage of stored data having an unusual, special data format can be managed easily, and integrated storage management of multiple sets of stored data handled in different operation environments can be carried out easily as well.

### BRIEF DESCRIPTION OF THE DRAWINGS

Fig. 1 is an explanatory drawing showing the construction of a computer system CS;
Fig. 2 is a flow chart showing the associating store process executed by a storage management server 20;
Fig. 3 is an explanatory drawing showing the exchange of data during the associating store process;
Fig. 4 is an explanatory drawing showing an example of management information;
Fig. 5 is an explanatory drawing showing an example of data migration information;
Fig. 6 is a flow chart showing the associating migration process executed by the storage management server 20;
Fig. 7 is an explanatory drawing showing the exchange of data during the associating migration process;
Fig. 8 is a flow chart showing the restoration process executed by a data restoration server 60; and
Fig. 9 is an explanatory drawing showing the exchange of data during the restoration process.

### DESCRIPTION OF THE PREFERRED EMBODIMENTS

In order to further clarify the construction and operation of the present invention described above, the data storage management technology in which the present invention is applied will be described below in more detail

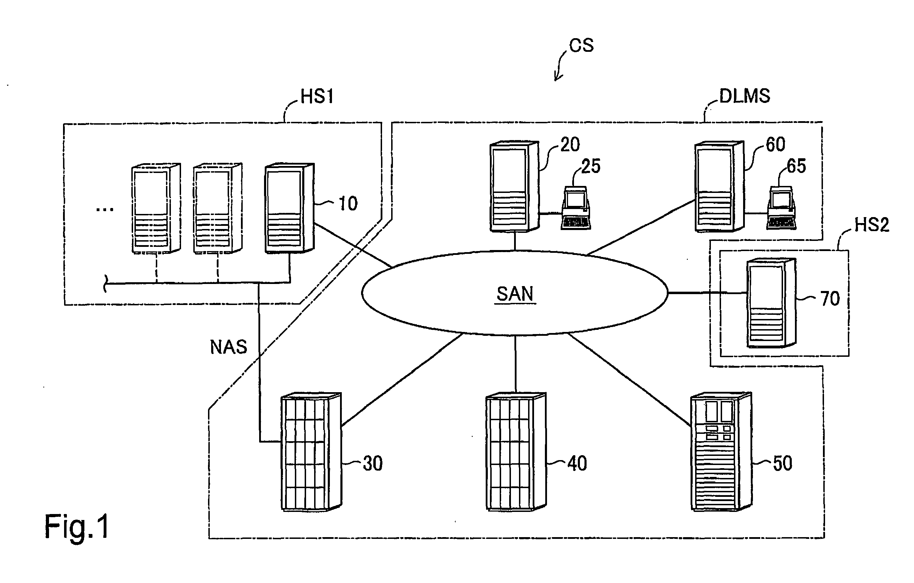

Fig. 1 is an explanatory drawing showing the construction of a computer system CS. The computer system CS comprising an embodiment of the present invention comprises a host computer system HS1 that includes a host computer 10 that executes prescribed data processing, a data lifecycle management system DLMS that saves at least some of the host data handled by the host computer 10 as stored data, and a host computer system HS2 that includes a host computer 70 that executes data processing using the stored data.

The data lifecycle management system DLMS includes storage systems 30, 40, 50 that can store prescribed data, a storage management server 20 that can manage the storage of stored data using the storage systems 30, 40, 50, and a data restoration server 60 that restores stored data such that it can be processed by the host computer 70. The storage systems 30, 40, 50, the storage management server 20 and the restoration server 60 comprise a SAN (Storage Area Network) that can carry out the mutual exchange of data over a Fibre Channel. The host computers 10 and 70 are connected to the SAN comprising the data lifecycle management system DLMS over a Fibre Channel.

The storage management server 20 and data restoration server 60 of the data lifecycle management system DLMS are computers that each include a central processing unit (CPU), a random access memory (RAM), a hard disk drive (HDD) and other hardware such as various interfaces. Application software programs ('applications') such as those that manage the storage of stored data are installed together with the operating system (OS) on the storage management server 20. Applications such as those that restore the stored data are installed together with the OS on the data restoration server 60. Terminal devices 25, 65 that include user interfaces such as a display or keyboard are connected to the storage management server 20 and the data restoration server 60, respectively, and can receive various inputs from the user.

The storage system 30 of the data lifecycle management system DLMS is a primary storage system for initial storage of data stored in the data lifecycle management system DLMS. It includes multiple FC drives comprising HDDs compatible with the data transfer speed of the Fibre Channel used, and further includes a RAID controller that manages via RAID technology the storage of data on the multiple FC drives, as well as various interfaces. The storage system 30 is connected to the SAN and is connected directly to the network to which the host computer system HS1 is connected, and can be used by the host computer 10 as NAS (Network Attached Storage). Host data stored directly in the storage system 30 from the host computer 10 is handled as stored data by the data lifecycle management system DLMS.

The storage system 40 of the data lifecycle management system DLMS is a near-line storage system that stores stored data after it is stored in the storage system 30. It includes multiple ATA drives comprising HDDs that comply with the standards for ATA drives, which have a lower data transfer speed and lower cost per storage size (e.g. dollars per Gigabyte) than FC drives, and further includes a RAID controller that manages via RAID technology the storage of data on the multiple ATA drives. Meanwhile, the storage system 40 need not include ATA drives so long as it offers lower cost per storage size than the storage system 30.

The storage system 50 of the data lifecycle management system DLMS is an off-line storage system that stores stored data after it is stored in the storage system 40. It includes one or more magnetic tape drives that read and write data to magnetic tape contained in a tape cartridge. The tape cartridges on which stored data is stored in the storage system 50 are managed off-line after being removed from the storage system 50. Meanwhile, the storage system 50 need not include magnetic tape drives so long as it offers a lower cost per storage size than the storage system 40.

The host computer 10 of the host computer system HS1 is a computer having a CPU, RAM, HDD, various interfaces and other hardware. In addition to an OS, an application that enables the use of the data lifecycle management system DLMS and other applications that carry out data processing are installed on the host computer 10.

The host computer 70 of the host computer system HS2 is a computer having an architecture that differs from that of the host computer 10 of the host computer system HS1 in terms of both hardware and software. In addition to the OS, which differs from that on the host computer 10, an emulator that allows the hardware operation environment of the host computer 10 to be reproduced via software, as well as an application that enables the use of the data lifecycle management system DLMS and other applications, are installed on the host computer 70. The host computer 70 is a successor host computer that is introduced in order to replace the host computer 10.

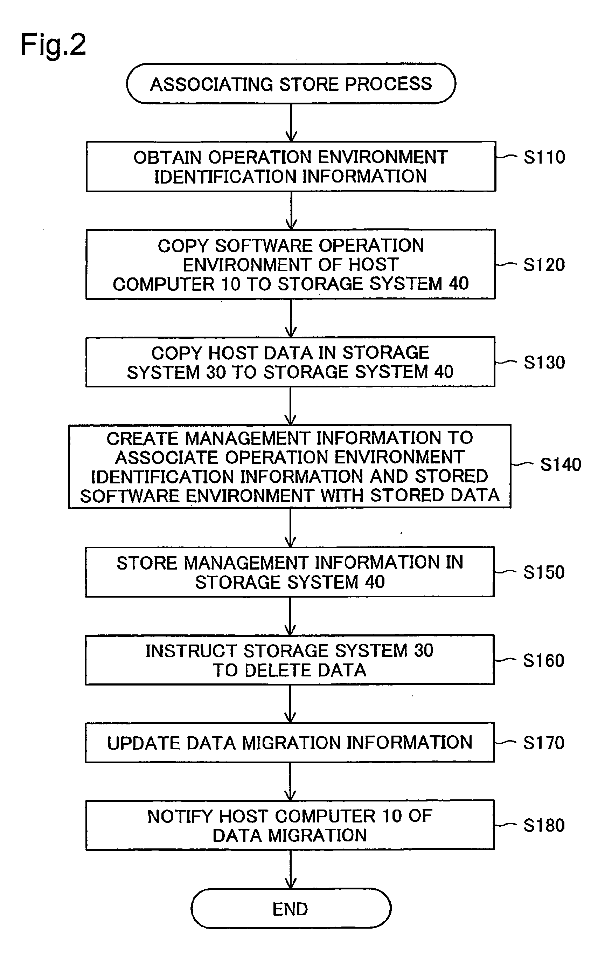

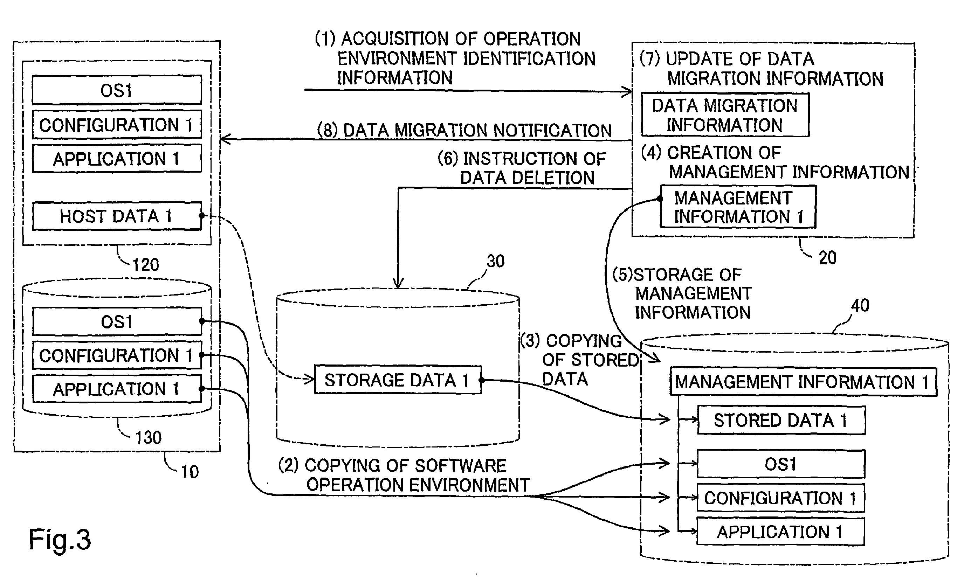

Fig. 2 is a flow chart showing the associating store process executed by the storage management server 20. Fig. 3 is an explanatory drawing showing the exchange of data that occurs during the associating store process. The associating store process is a process in which stored data stored in the storage system 30 is migrated to the storage system 40. In this embodiment, it is a process executed via the software- based operations of the storage management server 20. The associating store process may be executed where a request for migration of stored data from the host computer 10 to the storage management server 20 is issued, or where a data migration instruction is issued by the user via the terminal device 25, but in this embodiment, it is executed where the storage period during which the stored data resides in the storage system 30 has reached a prescribed time interval.

The various processes of the associating store process shown in Fig. 2 are realized via the execution of a prescribed program on the storage management server 20. STEP(1): When the association store process shown in Fig. 2 is begun, the storage management server 20 obtains operation environment identification information that identifies the hardware and software operation environments used in order for the host computer 10 to process the stored data to be migrated so as to reproduce the operation environment from the information at the restoration process (step S110). While the operation environment identification information may be obtained through various routes, such as by obtaining from the host computer 10 via the SAN operation environment identification information loaded in advance into the internal memory of the host computer 10, or by obtaining operation environment identification information input by the user via the terminal device 25, in this embodiment, the storage management server 20 obtains the operation environment identification information by storing the operation environment identification information previously obtained via the terminal device 25 in an internal memory and by retrieving it from the internal memory.

Information within the operation environment identification information that identifies the hardware operation environment includes information indicating the type of hardware architecture of the host computer 10, information indicating the type of CPU of the host computer 10, and information indicating the memory mapping of the host computer 10. Information within the operation environment identification information that identifies the software operation environment includes information indicating the type of OS of the host computer 10 and information indicating the type of application by which to process the migration target stored data.

STEP(2): After the operation environment identification information is obtained, the storage management server 20 obtains the software operation environment identified by the operation environment identification information from the system disk 130 of the host computer 10 via the SAN as a stored software environment and copies the software operation environment of the host computer 10 to the storage system 40 by storing this stored software environment in the storage system 40 via the SAN (step S120). In this embodiment, the OS, configuration and applications comprised the software operation environment of the host computer 10 are stored in the storage system 40 as a stored software environment.

STEP(3): After the stored software environment in the storage system 40 is stored, the storage management server 20 copies the stored data to be migrated from the storage system 30 to the storage system 40 via the SAN (step S130). The stored data in the storage system 30 is host data handled by the main memory 120 of the host computer 10, and as described above, comprises host data stored directly in the storage system 30 from the host computer 10.

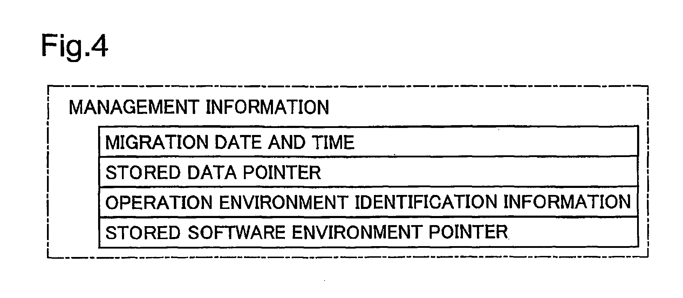

STEP(4): After the stored data is copied, the storage management server 20 creates management information that associates the operation environment identification information and the stored software environment with the stored data copied to the storage system 40 (step S140). Fig. 4 is an explanatory drawing showing an example of management information. The management information includes the date and time of migration indicating the date and time that the stored data was migrated ('MIGRATION DATE AND TIME'), a pointer indicating the location in the storage system 40 at which the stored data is stored ('STORED DATA POINTER'), the operation environment identification information obtained when the stored data is to be migrated ('OPERATION ENVIRONMENT IDENTIFICATION INFORMATION'), and a pointer indicating the location in the storage system 40 at which the stored software environment is stored ('STORED SOFTWARE EVIRONMENT POINTER').

STEP(5): The storage management server 20 then stores the created management information in the storage system 40 via the SAN (step S150). Because the management information includes pointers for the stored data and the stored software environment in the storage system 40, as well as the operation environment identification information, the stored data in the storage system 40 is stored in association with the operation environment identification information and the stored software environment.

STEP(6): After the management information in the storage system 40 is stored, the storage management server 20 instructs the storage system 30 to delete the stored data for which copying to the storage system 40 is completed (step S160). Furthermore, while in this embodiment, after the data to be migrated has been copied from the storage system 30 to the storage system 40 (step S 130), the storage system 30 is instructed to delete the migration target data (i.e. data to be migrated) as to which copying has been completed (step S160), a construction may be adopted in which if the storage management server 20 specifies to the storage system 30 or the storage system 40 the data to be migrated, the migration of the target data can be carried out between the storage system 30 and the storage system 40 without the subsequent involvement of the storage management server 20.

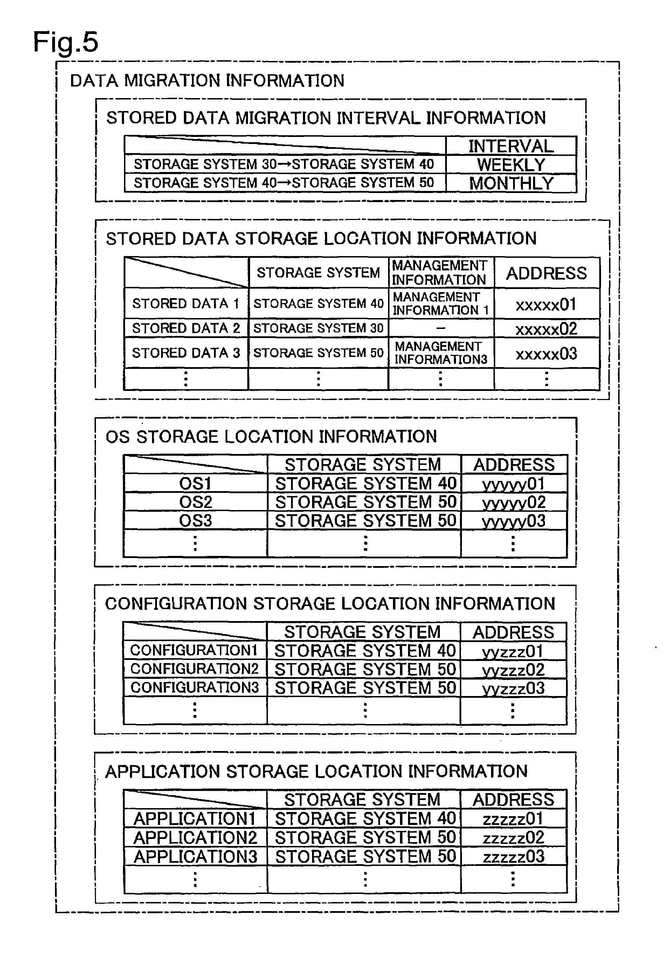

STEP(7): The storage management server 20 contains, in its internal memory, data migration information comprising various information pertaining to the migration of the stored data in the data lifecycle management system DLMS. After deletion of the stored data is instructed, the storage management server 20 updates the data migration information to reflect the migration of the stored data and storage of the stored software environment (step S170). Fig. 5 is an explanatory drawing showing an example of this data migration information. The data migration information includes stored data migration interval information indicating the setting for the interval used to trigger migration of the stored data from one storage system to another, stored data storage location information indicating the storage locations of the various sets of stored data in the data lifecycle management system DLMS, OS storage location information that indicates the storage locations of the various operating systems copied as part of a stored software environment, configuration storage location information indicating the storage locations of the various configurations copied as part of a stored software environment, and application storage location information indicating the storage locations of applications copied as part of a stored software environment. Recorded with respect to stored data are information indicating the storage system in which it is stored, information indicating the corresponding management information, and information indicating an address within the storage system. Recorded with respect to the stored software environment is information indicating the storage system in which it is stored and information indicating an address within the storage system.

The stored data migration interval information comprises setting data used for migration of the stored data under the control of the storage management server 20, and under the settings used in the embodiment shown in Fig. 5, the stored data in the storage system 30 is migrated to the storage system 40 weekly, while the stored data in the storage system 40 is migrated to the storage system 50 monthly. In this embodiment, the stored data migration interval information setting can be changed from the host computer 10 or the terminal device 25.

STEP(8): After the data migration information is updated, the storage management server 20 notifies the host computer 10 that the stored data in the storage system 30 has been migrated to the storage system 40 (step S180), whereupon the associating store process ends. While Fig.2 shows one example of associating store process, it is possible that the step S160 is executed after the step S180. In such case, the instruction for deleting data is issued from the storage management server 20 to the storage system 30 after the completion of the data migration is reported to the host computer 10.

This data migration notification enables the host computer 10 to know that the migrated stored data does not exist in the storage system 30. It is acceptable if, where a request for passing of the migrated stored data is received from the host computer 10, the storage management server 20 allows the host computer 10 to directly access the stored data by notifying the host computer 10 of the storage location of the stored data, but in this embodiment, the storage management server 20 allows the host computer 10 to access the stored data by copying the stored data to the storage system 30.

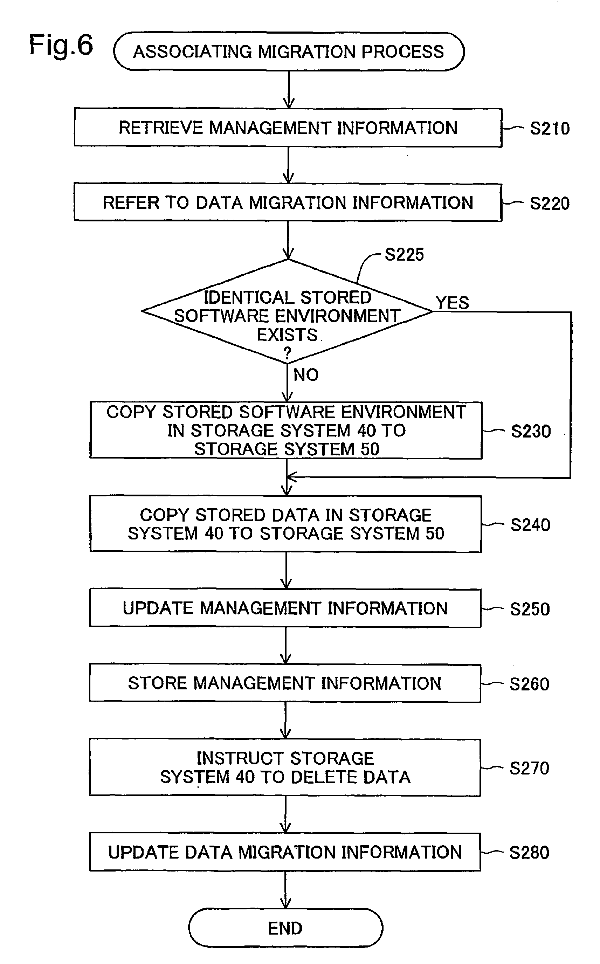

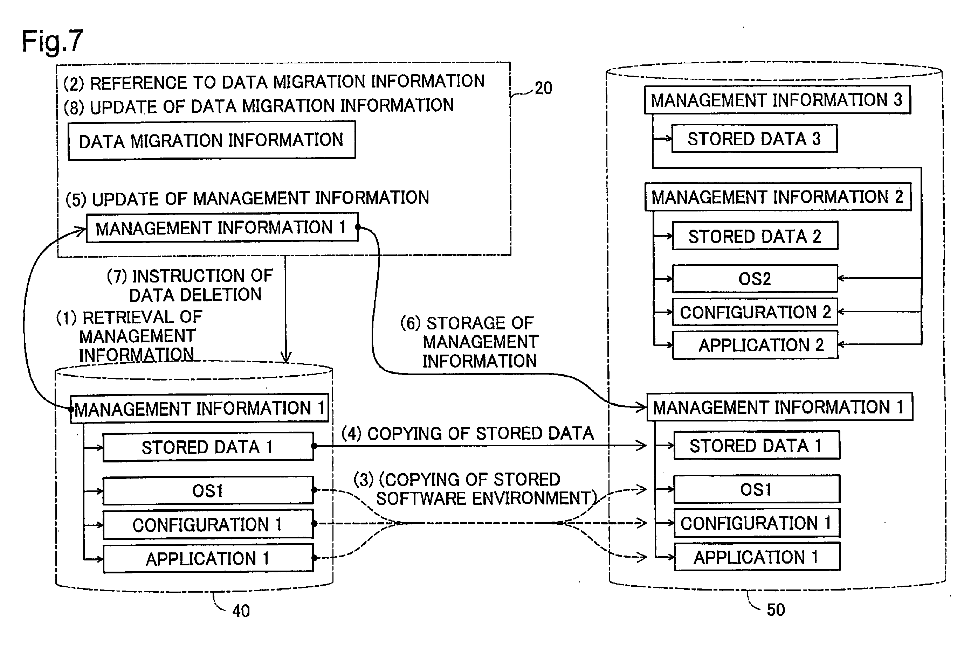

Fig. 6 is a flow chart showing the associating migration process executed by the storage management server 20. Fig. 7 is an explanatory drawing showing the exchange of data that takes place during the associating migration process. The associating migration process is a process that migrates stored data stored in the storage system 40 to the storage system 50, and in this embodiment, it is realized via software-based operations of the storage management server 20. The associating migration process may be executed where a data migration request is issued from the host computer 10 to the storage management server 20 or where the user has input a stored data migration instruction via the terminal device 25, but in this embodiment, it is executed when the prescribed storage interval for stored data in the storage system 40 has elapsed.

The various processes of the associating migration process shown in Fig. 6 are realized via the execution of a prescribed program on the storage management server 20. STEP(1): When the associating migration process shown in Fig. 6 is begun, the storage management server 20 retrieves the management information corresponding to the storage data to be migrated from the storage system 40 via the SAN with reference to the stored data storage location information contained in the data migration information shown in Fig. 5 (step S210).

STEP(2): The storage management server 20 then determines, with reference to the OS storage location information, configuration storage location information and application storage location information contained in the data migration information shown in Fig. 5 (step S220), whether or not an environment identical to the software operation environment identified by the operation environment identification information included in the management information retrieved in step S210 is already stored in the storage system 50 as a stored software environment (step S225).

STEP(3): If an identical stored software environment is not stored in the storage system 50, the storage management server 20 copies the stored software environment components that are not stored in the storage system 50 from the storage system 40 to the storage system 50 (step S230). For example, if none of the OS, configuration or application components of the stored software environment are stored in the storage system 50, the entire stored software environment is copied to the storage system 50, while if a part of the stored software environment is not stored in the storage system 50, that only that part of the stored software environment is copied to the storage system 50. If the entire stored software environment is stored in the storage system 50, the storage management server 20 proceeds to the next process without copying the stored software environment.

STEP(4): After the stored data to be migrated from the storage system 40 to the storage system 50 is copied via the SAN (step S240), STEP(5): the storage management server 20 updates the retrieved management information (step S250). This updating of the management information involves adding the date and time of migration, changing the stored data pointer, changing the stored software environment pointer, etc. The stored data pointer is a pointer that indicates the storage location on the storage system 50 to which the stored data is to be migrated. The stored software environment pointer is a pointer that indicates the storage location of the migrated software on the storage system 50 where a stored software environment is migrated, and indicates the storage location of the identical stored software environment in the storage system 50 where it is determined that the identical stored software environment already resides in the storage system 50.

STEP(6): The storage management server 20 then stores the updated management information in the storage system 50 via the SAN (step S260). Because the updated management information includes the pointers for the stored data and stored software environment in the storage system 50, as well as the operation environment identification information, the stored data in the storage system 50 is associated with the environment identification information and the stored software environment when it is being stored. As an example of association where it is determined that the identical stored software environment is stored in the storage system 50, Fig. 7 shows a case in which an OS 2, configuration 2 and application 2 are associated with the stored data sets 2 and 3 stored in the storage system 50. Because the tape cartridges will be managed off-line, it is preferred that the mutually associated management information, stored data and storage management information be stored on a single tape cartridge.

STEP(7): After the management information is stored in the storage system 50, the storage management server 20 instructs the storage system 40 to delete the stored data regarding which copying has been completed and the data stored in association with such data (step S270). In this embodiment, the storage system 40 is instructed to perform deletion of the migration target data regarding which copying was completed (step S270) after copying of the migration target data from the storage system 40 to the storage system 50 (steps S230, S240). However, a construction may be adopted wherein if the storage management system 20 identifies the migration target data for the storage system 40 or the storage system 50, the migration target data is migrated between the storage system 40 and the storage system 50 without the subsequent involvement of the storage management server 20.

STEP(8): After an instruction to delete the stored data is issued, the storage management server 20 updates the data migration information to reflect the migration of the stored data and the stored software environment (step S280), whereupon the associating migration process ends. While Fig.6 shows one example of the associating migration process, it is possible that the step S270 is executed after the step S280. In such case, the instruction of deleting data is issued from the storage management server to the storage system 40, after the update of the data migration information is completed.

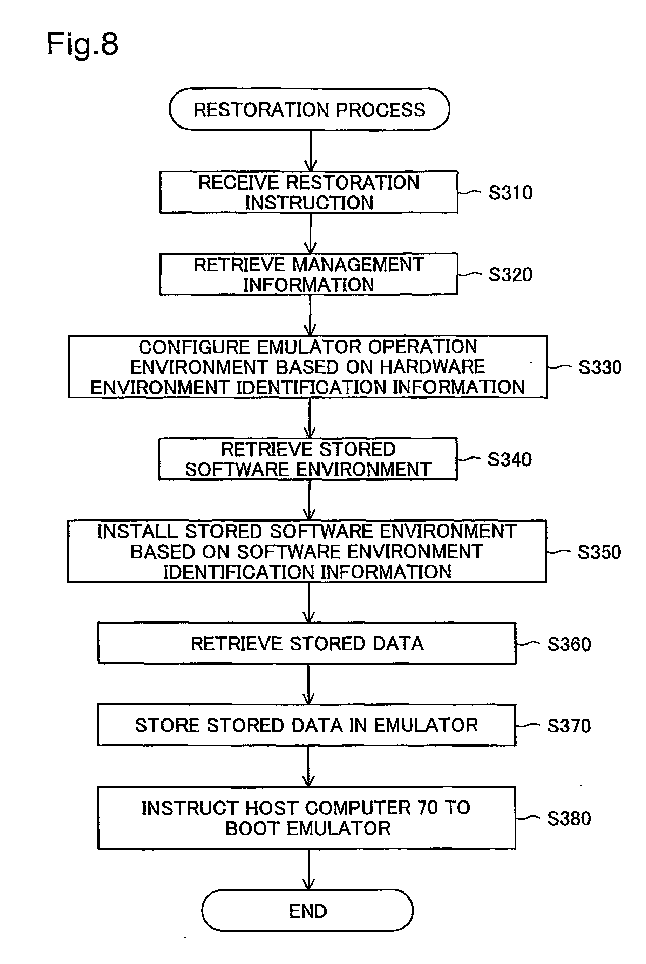

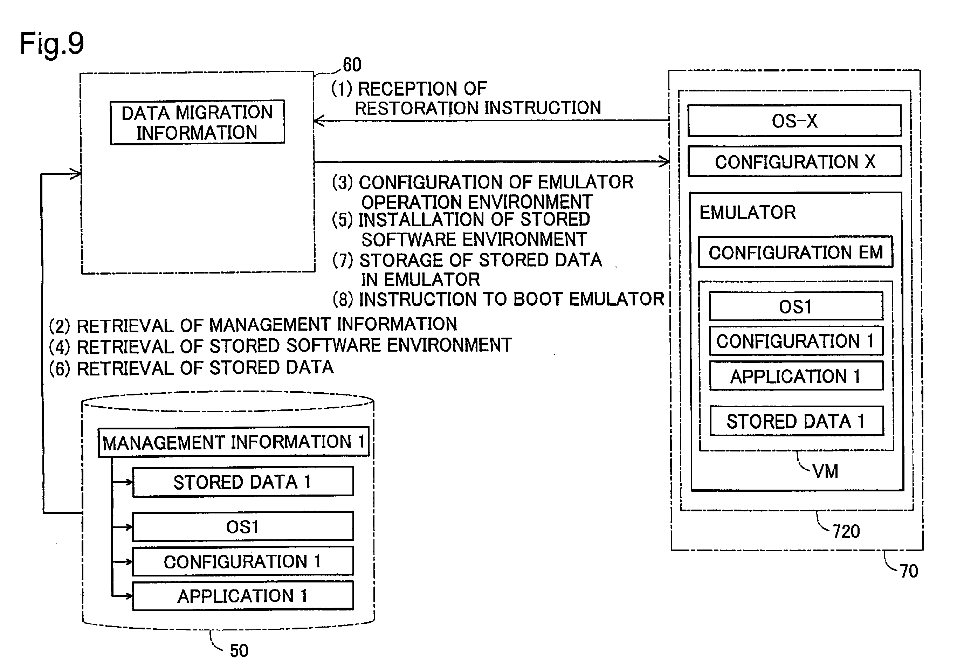

Fig. 8 is a flow chart showing the restoration process executed by the data restoration server 60. Fig. 9 is an explanatory drawing showing the exchange of data that occurs during the restoration process. The restoration process is a process that enables stored data stored in the storage system 50 to be processed by the host computer 70 having an architecture different from that of the host computer 10, and in this embodiment, is executed through the software-based operations of a data restoration server 60. As described above, an emulator that can implement via software the hardware operation environment of the host computer 10 is installed on the host computer 70.

The restoration process is executed where a restoration instruction instructing that stored data be processed is input from the host computer 70 to the restoration server 60, or where a restoration instruction is input by the user via the terminal device 65. The restoration instruction includes information indicating the stored data to be restored.

The restoration process shown in Fig. 8 are realized via the execution of a prescribed program on the data restoration server 60. STEP(1): When the restoration process shown in Fig. 8 is begun, the data restoration server 60 receives a restoration instruction (step S310), and STEP(2): retrieves from the storage system 50 via the SAN the management information corresponding to the restoration target stored data with reference to the stored data storage location information component of the data migration information shown in Fig. 5 (Step S320).

STEP(3): The data restoration server 60 configures the operation environment of the emulator installed on the host computer 70 based on the hardware operation environment identified by the operation environment identification information included in the management information (step S330). In the example shown in Fig. 9, the emulator is loaded into the main memory 720 of the host computer 70 and the emulator configuration EM is set based on the hardware operation environment of the host computer 10. A virtual machine memory VM equivalent to the main memory 120 of the host computer 10 is allocated and managed in the emulator in accordance with the settings of the configuration EM.

STEP(4): After the hardware operation environment for the emulator is configured, the data restoration server 60 retrieves the stored software environment associated with the restoration target stored data from the storage system 50 via the SAN based on the management information (step S340).

STEP(5): The data restoration server 60 installs the stored software environment retrieved from the storage system 50 in the emulator configured in the host computer 70, in accordance with the software operation environment identified by the environment identification information included in the management information (step S350). As a result, the software operation environment of the host computer 10 is stored in the virtual machine memory VM of the emulator.

STEP(6): After the stored software environment is installed on the emulator of the host computer 70, the data restoration server 60 retrieves the restoration target stored data from the storage system 50 (step S360). STEP(7): The retrieved stored data is then forwarded to the emulator of the host computer 70 (step S370). As a result, the restoration target stored data is stored in the virtual machine memory VM of the emulator. STEP(8): After the stored data is forwarded to the emulator, the data restoration server 60 instructs the host computer 70 to boot the emulator (step S380), whereupon the restoration process ends.

According to the computer system CS described above, because the operation environment of the host computer 70 can be prepared based on the operation environment identification information and the stored software environment associated with stored data via the associating store process carried out by the storage management server 20 (see Figs. 2, 3), the reproducibility of the stored data can be improved even where the operation environment of the host computer 10 has changed to that of the host computer 70. Furthermore, because the improvement of the reproducibility of stored data is not based on converting the format or the like of the stored data to make it compatible with the operation environment of the host computer 70, the reproducibility of stored data can be improved while maintaining the stored data in its existing format. Moreover, because the reproducibility of stored data can be ensured by associating it with hardware identification information and a software operation environment, the storage of stored data having an unusual, special data format can be managed easily, and integrated storage management of multiple sets of stored data handled in different operation environments can be carried out easily as well.

The associating migration process executed by the storage management server 20 (see Figs. 6, 7) enables stored data that is associated with environment identification information and a stored software environment to be migrated to a different storage system while maintaining its reproducibility. Furthermore, where multiple sets of stored data have the identical associated stored software environment, the memory capacity of the storage system can be conserved by associating the multiple sets of stored data with the common stored software environment (see steps S220-S250 in Fig. 6).

Because processing of stored data by the host computer 70 having an operation environment different from that of the host computer 10 can be carried out so long as an emulator is included on the host computer 70 that can reproduce via software the hardware environment used in order to process the stored data, the stored data can be easily restored.

Furthermore, because the OS, OS configuration and application programs are stored as a stored software environment, when stored data is restored, the software operation environment of the host computer 10 can be reproduced more faithfully. In addition, because the storage systems 30 and 40 are RAID storage systems managed using RAID technology, data reproducibility can be improved while increasing the reliability of storage of data including the stored data, the hardware identification information and the software operation environment. Because the storage system 50 consists of an inexpensive storage system having a slower data transfer rate than the storage system 40, and the storage system 40 consists of an inexpensive storage system having a slower data transfer rate than the storage system 30, stored data can be migrated to an appropriate storage system suited to changes in the value of such data over time while the reproducibility thereof is improved.

While one possibility of realizing the present invention was described above, the present invention is not limited in any way thereby, and may naturally be implemented in various forms within the essential scope of the invention. For example, the connection between the various component devices comprising the computer system CS is not limited to a Fibre Channel connection, and a non-Fibre Channel interface such as a SCSI (Small Computer System Interface), iSCSI (Internet SCSI), Gigabit Ethernet (Ethernet is a registered trademark), mainframe serial channel, mainframe Fibre Channel or other interface may be used. In addition, the application of the present invention is not limited to the connection of the various devices over a SAN or NAS. The present invention may be applied in other types of connection configurations. Furthermore, the exchange of data among the various storage systems of the data lifecycle management system DLMS need not consist of indirect exchanges via the storage management server 20, but may comprise direct exchanges among the storage systems based on instructions from the storage management server 20.

In the above embodiment, stored data restoration was carried out on the host computer 70, but it is acceptable if the restoration process is carried out on the host computer 10 in which the operation environment has been changed in the same manner as on the host computer 70. Furthermore, while the storage management server 20 and the data restoration server 60 were different devices in the above embodiment, the various processes described above may be executed by a single server that combines the functions of the two servers. In addition, the storage systems 30, 40, 50 are not limited to the storage system types described above, and may comprise a magnetic disk storage system, an optical disk storage system, a semiconductor memory storage system, a magnetic tape storage system, or some other type of storage system.

The software operation environment copied during the copying process of the associating store process (see step S120 in Fig. 2) may involve copying not of the environment components identified in the operation environment identification information, but rather copying of the entire contents of the system disk 130 of the host computer 10. Furthermore, in the embodiment described above, the restoration process was carried out for stored data in the storage system 50, but the restoration process may be executed in the same fashion for stored data in the storage system 40.

The operation environment of the host computer 70 that includes an emulator and processes stored data via the emulator may be stored together with stored data by executing the associating store process on the host computer 70 in the same manner as on the host computer 10. As a result, the reproducibility of stored data can be further improved. All changes within the meaning and range of equivalency of the claims are intended to be embraced therein. The scope and sprit of the present invention are indicated by the appended claims, rather than by the foregoing description.

The data storage management technology described above shows as an example the following sequence:
(A1). Construction of computer system CS
(A2). Operation of computer system CS
   (A2)-a. Associating store process
   (A2)-b. Associating migration process
   (A2)-c. Restoration process

Furthermore, other possibilities of sequences are possible, which are also described above.

## Claims

1. A method of data storage management in multiple storage systems (30, 40, 50) that save at least some of the host data handled by a host computer (10) as stored data in order to manage a migration of said stored data between said multiple storage systems (30, 40, 50),
said method comprising:
providing a storage management server (20) that accesses said multiple storage systems (30, 40, 50);
obtaining hardware identification information which reproducibly identifies a hardware operation environment used by said host computer (10) to process said stored data;
obtaining a software operation environment used by said host computer (10) to process said stored data from said host computer (10);
migrating said stored data stored in a prescribed storage system (30) among said multiple storage systems (30, 40, 50) to a different storage system (40) different from said prescribed storage system (30);
storing said hardware identification information and said software operation environment in said different storage system (40); and
making associations of said hardware identification information and said software operation environment stored in said different storage system (40), with said stored data stored in said different storage (40), by said storage management server (20).

2. The method according to claim 1, said method further comprising:
migrating said stored data stored in a first storage system (40) among said multiple storage systems (30, 40, 50) to a second storage system (50) different from said first storage system (40), wherein said stored data stored in said first storage system (40) is made with said associations of said hardware identification information and said software operation environment stored in said first storage system (40); and
migrating said hardware identification information and said software operation environment stored in said first storage system (40) to said second storage system (50), while said associations of said hardware identification information and said software operation environment with said stored data is maintained.

3. The method according to claim 1 or 2, said method further comprising:
migrating said stored data stored in a first storage system (40) among said multiple storage systems (30, 40, 50) to a second storage system (50) different from said first storage system (40), wherein said stored data stored in said first storage system (40) is made with said associations of said hardware identification information and said software operation environment stored in said first storage system (40);
migrating said hardware identification information stored in said first storage system (40) to said second storage system (50), while said association of said hardware identification information with said stored data is maintained; and
where an identical software operation environment identical with said software operation environment stored in said first storage system (40) is stored in said second storage system (50), making a association of said identical software operation environment stored in said second storage system (50) with said stored data migrated to said second storage system (50).

4. The method according to any one of the preceding claims, said method further comprising:
providing an emulator reproducing said hardware operation environment by software;
providing a restore management server (60) accesses a successor host computer (70) with said emulator installed, and a restore storage system (50) in which, among said multiple storage systems (30, 40, 50), said stored data is stored, wherein said stored data is made with said associations of said hardware identification information and said software operation environment stored in said restore storage system (50);
retrieving said hardware identification information having said association with said stored data from said restore storage system (50), by said restore management server (60);
configuring an emulator operation environment for said emulator based on said hardware operation environment specified by said retrieved hardware identification information;
retrieving said software operation environment having said association with said stored data from said restore storage system (50), by said restore management server (60);
installing said retrieved software operation environment on said emulator for which said emulator operation environment is configured;
retrieving said stored data from said restore storage system (50), by said restore management server (60); and
transferring said retrieved stored data to said emulator on which said software operation environment is installed.

5. The method according any one of the preceding claims,
wherein said software operation environment includes an operating system, a configuration of said operating system and an application program run on said operating system.

6. The method according any one of the preceding claims,
wherein said multiple storage systems (30, 40, 50) include one or more RAID storage systems managed by RAID technology.

7. The method according any one of the preceding claims,
wherein said multiple storage systems (30, 40, 50) include at least one of a magnetic disk storage system, an optical disk storage system, a semiconductor memory storage system or a magnetic tape storage system.

8. The method according to any one of the preceding claims,
wherein said stored data is migrated from a migration source storage system (30, 40) among said multiple storage systems (30, 40, 50) to a migration destination storage system (40, 50) having a lower data transfer rate than said migration source storage system (30, 40).

9. A data lifecycle management system (DLMS) for executing the method according to any one of claims 1 through 8, wherein said data lifecycle management system (DLMS) comprises said multiple storage systems (30, 40, 50) and said storage management server (20).

10. A machine-readable medium in which a program is recorded, said program for causing a computer of a data lifecycle management system (DLMS) to actualize the method according to any one of claims 1 through 8, wherein said data lifecycle management system (DLMS) comprises said multiple storage systems (30, 40, 50) and said storage management server (20).
